# EUROPEAN PATENT SPECIFICATION

(11) **EP 2 440 709 B1**
(45) Date of publication and mention of the grant of the patent: **28.05.2014**
(21) Application number: 10734369.1
(22) Date of filing: 08.06.2010
(51) Int. Cl.: F03D 11/04, E02D 27/42, E02D 23/02, E02D 27/52, F03D 1/00

(54) **BUOYANT STABILIZING DEVICE**
SCHWIMMENDE STABILISIERUNGSEINRICHTUNG
DISPOSITIF DE STABILISATION FLOTTANT

(30) Priority: 10.06.2009 NO 20092240
(43) Date of publication of application: 18.04.2012
(73) Proprietor: Seatower AS, 0369 Oslo (NO)
(72) Inventor: RAMSLIE, Sigurd, Quinns Rocks WA 6030 (AU)
(74) Representative: Protector IP Consultants AS
(86) International application number: PCT/NO2010/000214
(87) International publication number: WO 2010/143968

(56) References cited:
- WO-A1-2009/033994
- JP-A- 61 049 026
- US-A- 3 754 403
- US-A- 4 080 796
- US-A1- 2008 240 864

## Description

### Field of the invention

The present invention relates to devices for supporting floating structures during assembly, tow-out and installation on the seabed. More specifically, the invention relates to a buoyant stabilizing device for an element to be maneuvered in a body of water.

### Background of the invention

The increasing demand for exploitation of renewable energy sources enhances the demand for offshore wind power generation, as offshore wind conditions are more favorable than onshore conditions and the environmental impact is much less. There is an increasing need for structures that safely and reliably can support heavy wind turbines in a significant height over the sea level. The support structure generally comprises a of shaft, or tower, fixed to the seabed either directly by means of a foundation, or the structure is floating and connected to the seabed by means of a mooring arrangement. The present invention relates to the former type, namely the fixed support structures.

Typical fixed support structures for wind turbines presently in use, planned for use, and/or patented and described in publicly accessible sources are, in general terms characterized by the following:
1. Due to feasibility constraints the entire support structure is divided into two parts, namely a foundation and a tower, and the tower is in-situ mounted on the pre-installed foundation.
2. The foundation is fixed to the seabed by driven or drilled piles (either using multiple piles or large diameter mono-piles) or the foundation is deployed directly onto an artificial gravel layer through which the loads from the wind tower structure are transferred into the seabed.

Existing techniques for delivery of foundations from some delivery locations cannot meet the demand for high manufacture and installation rate, i.e. number of units to be manufactured and installed in one installation season. Existing solutions using the gravity force to fix the foundation to the seabed instead of various solutions based on the principle of pile foundations (i.e. conventional piles in groups or so-called monopiles), are known for their considerable limits of application related to their weight, water depth at the installation site as well as water depth at the load-out locations and along the transport route.

WO 03/080939 discloses a foundation structure for a wind turbine tower or similar, for installation on the seabed. The foundation structure can be manoeuvred to its offshore position using a vessel and separate (and removable) buoyancy means. These buoyancy elements must be rather large in order to maintain stability. When in position, the structure is lowered to the seabed and a pumping mechanism is used to sink a lower portion of the structure (e.g. skirts) into the seabed. When the foundation structure has been anchored (or piled) in position on the seabed, it is capable of supporting the wind turbine tower.

In order to ease fabrication, load-out, tow-out and installation of the foundation, it is desirable to design the foundations as hollow and comparably light structures, where the hollow interior subsequently is ballasted (by gravel, etc.) in connection with installation on the seabed. An example of such foundation is disclosed in Norwegian Patent Application No. 20082860. A problem with foundations of this type is their inherent instability in the water in the stages between at-shore fabrication (where it may be only partly filled with ballast material) and final installation on the seabed (when the hollow foundation has been filled with the required amount of ballast material). Design measures for eliminating the instability often result in increasing size and cost of the structure. The former yields increased hydrodynamic loads that call for more ballast, which attracts additional costs and installation time.

It is thus a need for a device for providing stability and buoyancy to the foundation in these stages during inshore assembly, tow-out and installation when the foundation is not stable, i.e. during transfer from shallow draft to a deep draft condition, while it is being ballasted.

### Summary of the invention

The invention is set forth and characterized in the main claim, while the dependent claims describe other characteristics of the invention

The device according to the invention comprises a buoyant stabilizing device for an element to be maneuvered in a body of water, characterized by at least a lower support section for buoyantly supporting the element, and a plurality of columns extending in a generally upward direction when the stabilizing devise is floating in the water.

The columns and/or lower support section comprise one or more hollow compartments for holding ballast water.

The element preferably comprises a hollow and in a certain depth range unstable foundation.

In one embodiment, the lower support section comprises a support area onto which the element may be placed.

The columns are preferably connected to the lower support section via respective arms protruding a distance from the lower support section.

In one embodiment, the device comprises a first module and a second module, each module comprising a respective lower support section and a plurality of columns extending from the lower support section.

Each module preferably comprises a shape which is complementary with a corresponding region on the element and with abutment means on the element, whereby the device buoyantly supports the element.

In one embodiment, each module comprises respective hook joints, whereby the modules may be interconnected to forming a unitary buoyant stabilizing device.

In the first embodiment the element floats off the device, thus the element has to be designed with sufficient floating stability at the float-off. In the second embodiment the device allows to lift-off the element from seabed in shallower depth and to deploy the element onto the seabed in deeper water without the requirement of the floating stability in any phase.

The present invention introduces a number of parameters and structural compatibility by using different material types that can be applied for optimizing the supply of ready-for-operation structural supports for offshore wind farms. The following advantageous aspects are achieved:
1. Transport to the site on deck of barges and vessels is eliminated or significantly reduced
2. Separate buoyancy elements during tow-out are not required, also in optional embodiment
3. Deployment into the position (transfer from the transport position to the operation position) by adding ballast, not by lifting
4. Need for large offshore cranes is avoided

In addition to lower overall costs the present invention resolves shortcomings associated with the known solutions by:
1. Enabling delivery of the foundations from assembly sites allowing work in moderately sized areas and operation of shallow draft vessels thus widening the selection of fabrication sites
2. Increasing manufacturing and installation rate
3. Reducing risks from adverse weather conditions on the progress of installation
4. Reducing needs for specialized vessels
5. Allowing superstructure (tower, wind generator, etc) to be fitted to foundation structure at or near shore, prior to tow to installation location

### Brief description of the drawings

These and other characteristics of the invention will be clear from the following description of a preferential form of embodiments, given as non-restrictive examples, with reference to the attached figures wherein:
Figure 1 is a side view of a first embodiment of the buoyant stabilizing device according to the invention, supporting a foundation in a body of water;
Figure 2 is a side view of the embodiment shown in figure 1, illustrating a separation between the stabilizing device and the foundation;
Figure 3 is a top view of the foundation and stabilizing device shown in figure 1;
Figure 4 is a side view of a second embodiment of the buoyant stabilizing device according to the invention, supporting a foundation in a body of water;
Figure 5 is a side view of the embodiment shown in figure 4, illustrating a connection sequence; and
Figure 6 is a top view of one element of the stabilizing device shown in figure 5, connected to a foundation.

### Detailed description of preferential embodiments

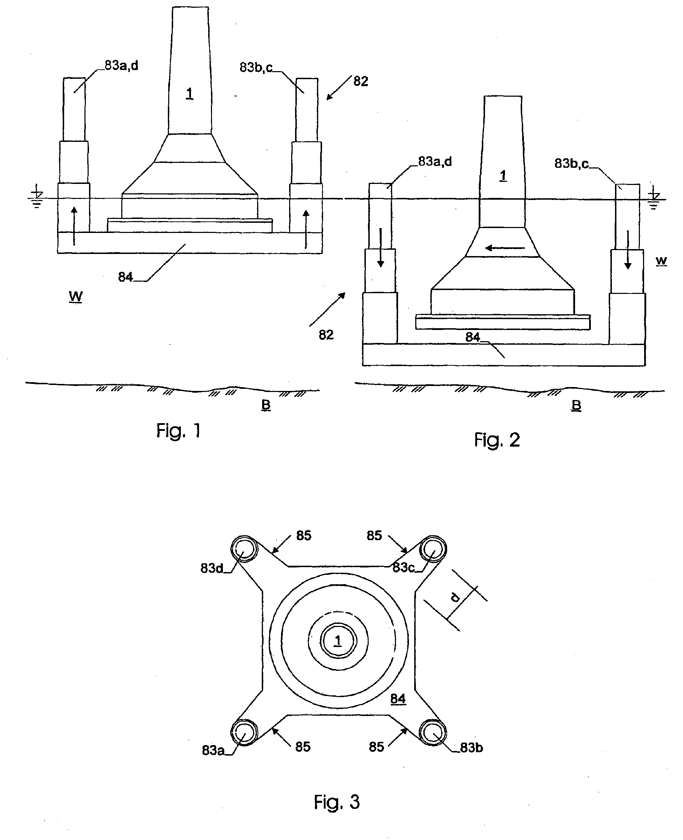

Figure 1 illustrates a first embodiment of the buoyant stabilizing device 82 floating in a body of water W and supporting a foundation 1. The foundation 1 may be a support structure for e.g. a wind turbine tower, which may be connected to the upper end of the foundation before or after the foundation has been installed on a seabed. One example of such foundation is disclosed in Norwegian Patent Application No. 20082860.

In the situation illustrated by figure 1, the buoyant stabilizing device 82 has been ballasted in order to attain a sufficient draft in the water or keel clearance of the floating foundation. Then, the foundation 1, which may or may not yet be completed or ballasted, has been floated to a position between the columns 83a-d of the ballasted buoyant stabilizing device, and thereafter the buoyant stabilizing device has been de-ballasted so that the foundation 1 as shown in figure 1 is resting on a lower section 84 of the buoyant stabilizing device 82. In this position, the foundation 1 is prepared to be ballasted, hence transferred from shallow draft to deep draft, for towage to the installation site.

In figure 2, the buoyant stabilizing device 82 has been ballasted further, compared to the state in figure 1, until a sufficient clearance between the foundation 1 and the lower part 84 has been obtained. The illustration in figure 2 is typical for a situation where the foundation I, adequately ballasted, has arrived at a location with water depth sufficient to performing the towage to the installation site.. The arrows in figure 2 indicate a downward movement of the buoyant stabilizing device 82 and that the foundation 1 is ready to be towed away and the buoyant stabilizing device 82 can be reused for aiding the next foundation during ballasting of the foundation, in a phase in which the foundation is not stable.

Figure 3 is a top view of the buoyant stabilizing device 82 and the foundation 1 shown in figures 1 and 2.

As illustrated by figures 1 - 3, the first embodiment of the buoyant stabilizing device 82 comprises a lower support section 84, providing a support area onto which the foundation may be placed. Extending upwards from the lower support section 84 are four columns 83a-d. In the illustrated embodiment, each of the columns 83a-d are connected to a respective region of each of the four corners of the lower support section. As illustrated by figure 3, the columns 83a-d are connected to the lower support section 84 via respective protruding arms 85, at a distance d from the respective corner area of the lower support section.

Both the lower support section 84, the arms 85 and the columns 83a-d comprise hollow bodies, e.g. separated by internal partitions (not shown), which may be filled with ballast fluid in a controlled manner via valves and orifices (not shown). The columns are designed such that an upper portion extends above the water surface, even when the device is in a ballasted state.

The distance d, compared to the support area of the lower support section 84, may be dimensioned to provide the most favorable stability for the actual application.

With this buoyant stabilizing device, a foundation 1 may be supported during transfer from shallow to deep draft condition while being only partly ballasted. The buoyant stabilizing device eliminates the need for designing the foundation 1 such that it is buoyantly stable during such transfer in a vertical state. It is therefore not necessary to add weight to the foundation until it is in a position to be installed on the seabed. This yields savings in the form of reduced size of the body of the foundation 1.

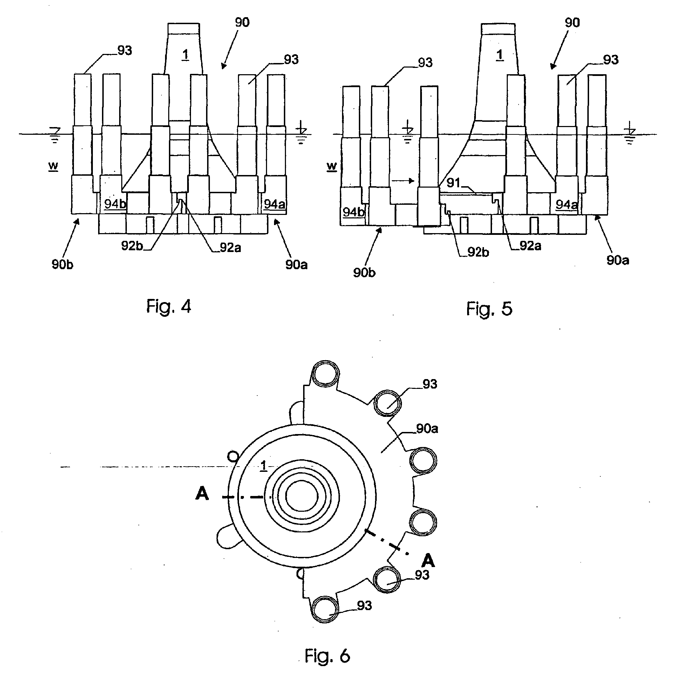

A second embodiment of the buoyant stabilizing device according to the invention will now be described with reference to figures 4 - 6.

In this second embodiment, the buoyant stabilizing device 90 comprises two modules 90a,b, each having a shape which is complementary of the shape of a lower region of the foundation 1. Figure 6 shows how one module 90a is fitting around half the circumference of the foundation 1.

Each module 90a,b comprises a respective lower section 94a,b which is adapted for connection and/or abutment against a corresponding portion of the foundation 1. Such contact portion may be a flange 91 on the foundation, which is described in more detail below with reference to figure 5. In the illustrated embodiment, the foundation and its complementary contact region on each of the modules 90a,b are circular bodies. However, other shapes shall be considered to be within the scope of the invention.

A number of columns 93 connected to each lower section 94a,b and are extending upwards when the device is buoyant in the water. Each lower section 94a,b and the columns 93 comprise hollow bodies, e.g. separated by internal partitions (not shown), which may be filled with ballast fluid in a controlled manner via valves and orifices (not shown). The columns are designed such that an upper portion extends above the water surface, even when the device is in a ballasted state.

Figure 4 shows a side view of the floating foundation 1 to which the modular buoyant stabilizing device 90 has been connected. The vertical support connection between each of the modules 90a,b of the device 90 and the foundation 1 is provided by a flange element 91 on the lower part of the foundation (see figure 5). The interconnection between the two modules 90a,b is provided by respective hook-joint, key or similar. Each module 90a,b is provided with a respective hook element 92a,b, where the hook element 92a on the first module 90a is facing downwards while the hook element 92b on the second module 90b is facing upwards.

The process of connecting the modular device 90 to a foundation 1 is illustrated by figure 5. Here, the first module 90a has been ballasted, moved into abutment with the foundation, and then de-ballasted sufficiently for the first module 90a to abut against the flange element 91. The arrow in figure 5 indicates that the second module 90b is being moved towards the foundation in a ballasted condition and having a deeper draft than the first module 90a. When the second module 90b is in place against the foundation 1, the second module is de-ballasted, causing it to rise into abutment with the flange element 91 and whereupon the hook elements 92b interlocks with the hook element 92a on the first module 90a. A rigid support structure 90 is thus formed for the foundation.

The connection process described above with reference to figure 5 may be performed when the foundation is resting on the seabed, e.g. while being assembled from a nearby quayside, or when it is floating in the water not yet ballasted or completed.

As mentioned above, the modules 90a,b and the associated columns 93 are designed as hollow bodies, preferably in a shape embracing the foundation along its periphery, e.g. circular as seen in the figures. The body of each module 90a,b comprises of a lower section 94 resembling a pontoon and a number of vertical columns 93. The first and second modules 90a,b of the modular floating device 90 are designed for free floating conditions (i.e. not attached to the foundation) in a stable vertical position. In this stage the lower section 94 is flooded with ballast water. Fine adjustments of draft, required for mating with the foundation and detaching for it, are performed by changing the amount of ballast water in dedicated vertical column(s) 93. The lower section 94 is designed so that either it is flooded or empty, thus there is no free water surface during the operations. Further by means of its design the wave induced motions are greatly reduced.

Figure 6 is top view of the foundation 1 attached to the first module 90a, similar to what is shown in figure 5. The purpose of the modular buoyant stabilizing device 92 is to provide additional water plane area to the floating foundation 1 and hence make it stable during tow-out and installation.

The invention is particularly suitable for supplies from assembly site with limited water depth along the towing route, for application in shallow waters in particular in the interval between 8 m and 35 m.

## Claims

1. A buoyant stabilizing device (82; 90a,b) for movement in a body of water (W), **characterized by**
- a lower support section (84; 94a,b) comprising one or more ballastable hollow bodies for buoyantly and releasably supporting an element (1) resting on the lower support section, and
- a plurality of columns (83a-d; 93) comprising one or more hollow compartments and extending from the lower support section in a generally upward direction when the stabilizing device is floating in the water.

2. The device of claim 1, wherein the element (1) comprises a hollow unstable foundation element (1).

3. The device of any one of claims 1 - 2, wherein the lower support section (84) comprises a support area onto which the element (1) may be placed.

4. The device of any one of claims 1 - 3, wherein the columns (83a-d) are connected to the lower support section via respective arms (85) protruding a distance (*d*) from the lower support section.

5. The device of any one of claims 1 - 4, comprising a first module (90a) and a second module (90b), each module (90a,b) comprising a respective lower support section (94a,b) and a plurality of columns (93) extending from the lower support section.

6. The device of claim 5, wherein each module (90a,b) comprises a shape which is complementary with a corresponding region on the element (1) and with abutment means (91) on the element, whereby the device buoyantly supports the element (1).

7. The device of claim 5 or claim 6, wherein each module (90a,b) comprises respective hook joints (92a,b), whereby the modules (90a,b) may be interconnected to forming a unitary buoyant stabilizing device (90).

## Patentansprüche

1. Schwimmende Stabilisierungsvorrichtung (82; 90a,b) zur Bewegung in einem Gewässer (W), **dadurch gekennzeichnet, dass**
- ein unterer Stützabschnitt (84; 94a,b) einen oder mehrere überschwemmbare Hohlkörper zum schwimmenden und lösbaren Stützen eines Elements (1) umfasst, welches auf dem unteren Stützabschnitt aufliegt, und
- eine Mehrzahl von Säulen (83a-d; 93) einen oder mehrere Hohlräume umfasst und sich vom unteren Stützabschnitt in einer allgemeinen Aufwärtsrichtung erstreckt, wenn die Stabilisierungsvorrichtung im Wasser schwimmt.

2. Vorrichtung nach Anspruch 1, wobei das Element (1) ein hohles, unstabiles Basiselement (1) umfasst.

3. Vorrichtung nach einem der Ansprüche 1 oder 2, wobei der untere Stützabschnitt (84) eine Stützfläche umfasst, auf welcher das Element (1) angeordnet werden kann.

4. Vorrichtung nach einem der Ansprüche 1 bis 3, wobei die Säulen (83a-d) mit dem unteren Stützabschnitt über jeweilige Arme (85) verbunden sind, welche um einen Abstand (d) vom unteren Stützabschnitt vorspringen.

5. Vorrichtung nach einem der Ansprüche 1 bis 4, umfassend ein erstes Modul (90a) und ein zweites Modul (90b), wobei jedes Modul (90a,b) einen jeweiligen unteren Stützabschnitt (94a,b) und eine Mehrzahl von Säulen (93) umfasst, welche sich vom unteren Stützabschnitt erstrecken.

6. Vorrichtung nach Anspruch 5, wobei jedes Modul (90a,b) eine Form umfasst, welche mit einem korrespondierenden Bereich auf dem Element (1) und mit Widerlagermitteln (91) auf dem Element komplementär ist, wobei die Vorrichtung das Element (1) schwimmend stützt.

7. Vorrichtung nach Anspruch 5 oder 6, wobei jedes Modul (90a,b) jeweilige Hakengelenke (92a,b) umfasst, wobei die Module (90a,b) miteinander verbunden werden können, um eine einheitlich schwimmende Stabilisierungsvorrichtung (90) zu bilden.

## Revendications

1. Dispositif de stabilisation flottant (82; 90a,b) conçu pour se déplacer dans un corps d'eau (W), **caractérisé par**:
- une section de support inférieure (84; 94a,b) comprenant un ou plusieurs corps creux lestable(s) pour supporter de façon flottante et libérable un élément (1) qui repose sur la section de support inférieure, et
- une pluralité de colonnes (83a-d; 93) comprenant un ou plusieurs compartiment(s) creux et s'étendant à partir de la section de support inférieure dans une direction essentiellement vers le haut lorsque le dispositif de stabilisation flotte dans l'eau.

2. Dispositif selon la revendication 1, dans lequel l'élément (1) comprend un élément de fondation instable creux (1).

3. Dispositif selon l'une quelconque des revendications 1 et 2, dans lequel la section de support inférieure (84) comprend une surface de support sur laquelle l'élément (1) peut être placé.

4. Dispositif selon l'une quelconque des revendications 1 à 3, dans lequel les colonnes (83a-d) sont connectées à la section de support inférieure par l'intermédiaire de bras respectifs (85) qui font saillie à une distance (d) de la section de support inférieure.

5. Dispositif selon l'une quelconque des revendications 1 à 4, comprenant un premier module (90a) et un deuxième module (90b), chaque module (90a,b) comprenant une section de support inférieure respective (94a,b) et une pluralité de colonnes (93) qui s'étendent à partir de la section de support inférieure.

6. Dispositif selon la revendication 5, dans lequel chaque module (90a,b) présente une forme qui est complémentaire à celle d'une région correspondante sur l'élément (1) et avec celle de moyens de butée (91) sur l'élément, dans lequel le dispositif supporte l'élément (1) de façon flottante.

7. Dispositif selon la revendication 5 ou la revendication 6, dans lequel chaque module (90a,b) comprend des joints d'accrochage respectifs (92a,b), dans lequel les modules (90a,b) peuvent être interconnectés afin de former un dispositif de stabilisation flottant unitaire (90).
